(19) Europäisches Patentamt
European Patent Office
Office européen des brevets

(11) Numéro de publication: **0 021 895**
**B1**

(12) **FASCICULE DE BREVET EUROPEEN**

(45) Date de publication du fascicule du brevet:
01.12.82

(21) Numéro de dépôt: **80400767.2**

(22) Date de dépôt: **30.05.80**

(51) Int. Cl.³: **F 16 K 17/40,** F 16 K 13/06

(54) **Vanne de sécurité à ouverture par cisaillement d'un conduit borgne.**

(30) Priorité: **07.06.79 FR 7914538**

(43) Date de publication de la demande:
**07.01.81 Bulletin 81/1**

(45) Mention de la délivrance du brevet:
**01.12.82 Bulletin 82/48**

(84) Etats contractants désignés:
**DE GB IT SE**

(56) Documents cités:
**FR-A-2 135 609**
**FR-A-2 242 622**
**US-A-3 093 151**

(73) Titulaire: **Société PYROMECA, Chemin de la Roquette, F-83000 Toulon (FR)**

(72) Inventeur: **Gouallec, Roger, Résidence l'Eolienne - AI Boulevard de la Martille, F-83000 Toulon (FR)**
Inventeur: **Gouallec, Jean-Pierre, 2, rue Revest, F-83100 Toulon (FR)**

(74) Mandataire: **Pech, Bernard et al, Sté nationale des poudres et explosifs 12, quai Henri IV, F-75181 Paris Cédex 04 (FR)**

ACTORUM AG

# Vanne de sécurité à ouverture par cisaillement d'un conduit borgne

L'invention concerne une vanne de sécurité à ouverture par cisaillement d'un conduit borgne, destinée notamment à permettre la mise en communication rapide de deux enceintes contenant des fluides à des pressions différentes, cette vanne de sécurité comportant un corps qui est muni d'une part d'au moins un conduit terminé par ce conduit borgne possédant une zone de fragilisation et d'autre part d'un dispositif de rupture par cisaillement qui est un dispositif de translation comportant un piston commandé par pression de fluide.

Les vannes de sécurité à ouverture par cisaillement d'un obturateur tel qu'un conduit borgne sont connues, et sont parfois désignées également par les termes de soupape ou de valve, et par exemple FR-A-2 135 609 et FR-A-2 242 622 décrivent deux types particuliers de ces vannes. Selon FR-A-2 135 609 et notamment selon les figures 4a et 4b, il est décrit que le conduit borgne se termine par un disque dont le cisaillement périphérique est obtenu par une traction exercée selon l'axe de ce disque, ce qui conduit nécessairement à ce que le fluide qui s'échappe soit dévié, puisqu'après rupture, le disque est situé en face de l'entrée du fluide sous pression. Un tel type de vanne conduit donc à un écoulement de fluide qui subit une importante perte de charge, ce qui peut être préjudiciable au bon fonctionnement d'une vanne de sécurité qui doit permettre l'évacuation la plus rapide possible du fluide transitant par cette vanne. Selon FR-A-2 242 622 mentionné comme exemple, il est décrit que le conduit borgne se termine par un disque dont le cisaillement périphérique est obtenu par une traction exercée dans un plan orthogonal à l'axe de ce disque, il faut noter que si en position terminale du piston, le fluide peut s'échapper sans aucune déflexion, par contre durant le déplacement du piston, la section cisaillée du disque frottera sur la section cisaillée solidaire du corps de la vanne. Un tel type de vanne tend donc à former par frottement des particules telles que des copaux ou des limailles, ce qui peut être préjudiciable au bon fonctionnement d'une vanne de sécurité, notamment lorsque le fluide évacué doit être acheminé dans un réseau de tubulures difficile à purger ou comportant des appareillages pouvant être endommagés par ces particules.

La présente invention a pour but, d'une part d'éviter toute formation de particules résultant du frottement des deux sections cisaillées, et d'autre part, de réduire les pertes de charges du fluide évacué transitant par la vanne de sécurité, et se caractérise en ce que le dispositif de rupture se déplace dans un plan qui est incliné par rapport au plan défini par la zone de fragilisation du conduit borgne, l'angle d'inclinaison étant compris entre 0,5 degré et 45 degrés, cette inclinaison étant telle qu'après cisaillement, la section de la partie terminale du conduit borgne tend à s'écarter de la section solidaire du conduit du corps de la vanne. Il est souhaitable que l'inclinaison des deux plans soit supérieure à 0,5 degré, de manière à ce que l'écartement des deux sections cisaillées soit suffisant pour que les bavures de cisaillement n'entrent pas en contact, et soit inférieure à 45 degrés, de manière à ne pas augmenter inutilement le périmètre de la zone de fragilisation. Préférentiellement, cette inclinaison est comprise entre 1 et 10 degrés, les faibles inclinaisons étant admissibles lorsque le matériau constitutif de l'obturateur présente des caractéristiques mécaniques permettant un cisaillement avec peu de bavures.

Selon une première variante de réalisation, le piston comporte en aval une guillotine munie de deux lumières dont l'une entoure la partie terminale du conduit borgne, la seconde lumière étant destinée au passage du fluide lorsque le piston occupe sa position finale après cisaillement du conduit borgne, et selon une seconde variante, le piston comporte en aval un percuteur agissant sur la partie terminale du conduit borgne.

Selon un mode de construction particulier, la zone de fragilisation du conduit borgne est contenue dans un plan orthogonal à ce conduit, et le dispositif de rupture est incliné par rapport à ce plan orthogonal, tandis que selon un autre mode de construction, la zone de fragilisation est contenue dans un plan incliné par rapport à un plan orthogonal au conduit obturé et le dispositif de rupture se déplace dans un plan orthogonal à ce conduit. Selon une configuration particulière, le conduit borgne comporte deux zones de fragilisation disposées de part et d'autre de la partie terminale de ce conduit.

Selon une mise en œuvre préférentielle, le dispositif de rupture est actionné par le gaz d'une charge pyrotechnique combustible ou explosive.

Les avantages obtenus grâce à cette invention consistent essentiellement en ce qu'immédiatement après la rupture par cisaillement du conduit borgne, les deux sections cisaillées sont écartées l'une de l'autre, cette absence de frottement permettant d'éviter toute formation de particules telles que copeaux ou limailles.

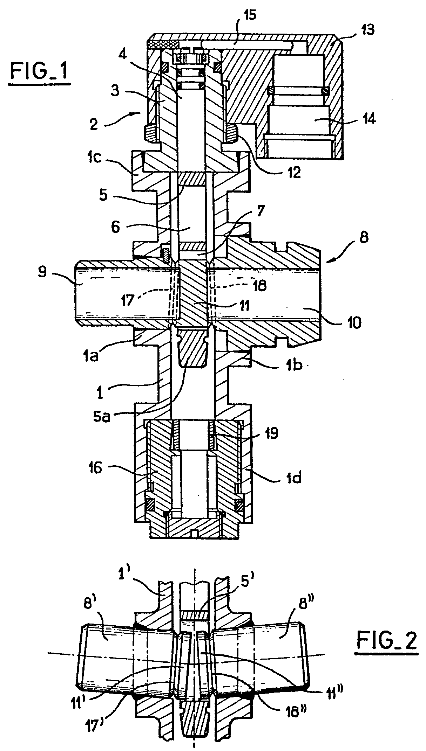

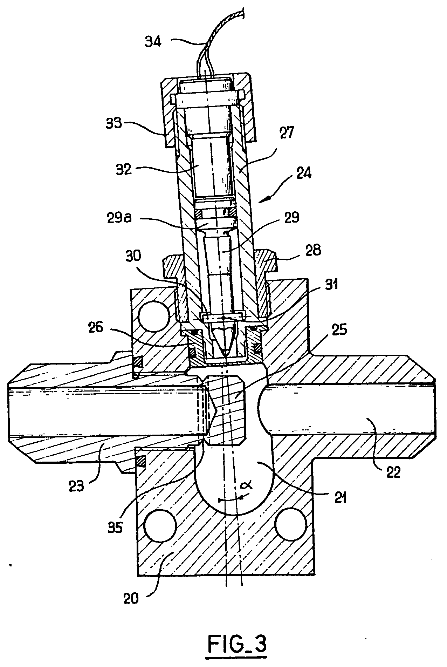

Dans ce qui suit, l'invention est exposée plus en détail à l'aide d'un dessin représentant trois réalisations particulières vues en coupe selon le plan passant par l'axe du ou des conduits borgnes et par l'axe du piston du dispositif de translation de chacune des vannes, la figure 1 correspondant à une vanne dont le dispositif de rupture est contenu dans un plan orthogonal à l'axe du conduit borgne, la figure 2 correspondant à une vanne semblable à la vanne représentée à la figure 1, et étant limitée aux seuls éléments qui sont différents, et la figure 3 correspondant à une vanne dont le dispositif de rupture est incliné par rapport à un plan orthogonal à l'axe du conduit.

Selon la figure 1, la vanne de sécurité à ouverture par cisaillement comprend un corps creux 1, dont les deux flasques latéraux parallèles sont chacun muni d'un bossage latéral alésé 1a et 1b, et dont les parties supérieures et inférieures se terminent également par des bossages 1c et 1d qui permettent la fixation des éléments de centrage du dispositif de translation 2. Le cylindre 3 du vérin de translation est fixé sur le bossage supérieur 1c du corps et assure le guidage du piston cylindrique 4 qui comporte en aval une guillotine 5 munie de deux lumières 6 et 7, le conduit borgne double 8 étant engagé dans la lumière inférieure et ce conduit soudé aux bossages latéraux étant muni des deux alésages 9 et 10 qui ménagent la partie terminale 11 située au droit de cette guillotine 5. Les zones de fragilisation du conduit borgne sont constituées par deux gorges 17 et 18 à section en vé qui sont taillées à l'extérieur et, conformément à l'invention, ces deux gorges sont réalisées selon deux plans obliques dont l'inclinaison est de 5 degrés par rapport au plan orthogonal au conduit passant par l'axe du piston 4, le dièdre fictif d'intersection des deux plans obliques étant situé vers l'amont du piston. La partie extérieure du cylindre 3 est fileté et permet la fixation par le contre-écrou 12 de la tête d'injection 13 du fluide moteur, la cartouche génératrice de gaz à haute pression (non représentée) étant engagée dans l'alésage 14 qui communique avec l'intérieur du cylindre par le perçage 15. Le bossage inférieur 1d est également fileté et reçoit le dispositif d'amortissement 16 qui limite le déplacement du piston 4 après cisaillement et en assure le positionnement au moyen de la bague tubulaire déformable 19 qui coopère avec le cône terminal 5a de la guillotine 5.

La vanne de sécurité à ouverture par cisaillement représentée partiellement à la figure 2 est en tous points semblable à la vanne représentée à la figure 1, à l'exception de la partie centrale qui fait l'objet de cette figure 2. Les bossages latéraux du corps creux 1' sont alésés obliquement et symmétriquement par rapport au plan médian de la guillotine 5' de manière à ce que ces alésages soient inclinés vers la partie interne inférieure de ce corps creux. Chaque alésage des bossages latéraux reçoit un conduit borgne 8' et 8'' en tous points identiques, les parties terminales 11' et 11'' de ces conduits borgnes étant engagées dans la lumière inférieure de la guillotine 5', et les gorges circulaires à section en vé 17' et 18'' étant contenues dans des plans respectivement orthogonaux aux axes des conduits borgnes 8' et 8''.

Selon la figure 3, la vanne de sécurité à ouverture par cisaillement comprend un corps creux 20 dont l'évidement central 21 corrspond avec l'alésage libre 22, avec l'alésage fileté qui reçoit la tubulure cassante 23 et qui est coaxial à l'alésage libre, et avec l'alésage supérieur qui permet la fixation du dispositif de rupture 24, cet alésage supérieur étant contenu dans un plan qui est incliné par rapport à un plan orthogonal à l'axe de l'alésage 22 d'un angle $\alpha = 3°$. La tubulure 23 comporte un obturateur dont la partie terminale 25 est délimitée par la zone de fragilisation déterminée par la gorge à section en vé 35 qui entaille la périphérie de cette tubulure au niveau de l'évidement central 21, le fond de cette gorge étant contenu dans un plan orthogonal à l'axe de l'alésage 22. L'alésage supérieur comporte un épaulement qui permet le positionnement de l'opercule d'étanchéité 26 sur lequel repose le cylindre 27 du vérin de translation qui est immobilisé par la bague filetée 28, et à l'intérieur du cylindre peut coulisser le piston 29 temporairement immobilisé d'une part au moyen de la rondelle d'appui 30 solidarisée à la partie aval du piston par la goupille de cisaillement 31 et d'autre part au moyen de la cartouche pyrotechnique 32 qui est fixée à l'extrémité amont du cylindre au moyen de la bague filetée 33. La cartouche pyrotechnique comprend une charge explosive pouvant être mise à feu au moyen du conducteur bifilaire 34 lorsque la vanne de sécurité doit être ouverte. Dès l'explosion contrôlée de la charge, le gaz générés agissent sur la tête 29a du piston et entraînent successivement la rupture de la goupille 31 et la translation du piston dont la partie aval est conformée en percuteur, de manière à crever l'opercule d'étanchéité 26 et à s'incruster dans la partie terminale 25 de l'obturateur, qui est cisaillé selon le fond de la gorge 35 et qui est entraîné au fond de l'évidement 21 sans qu'il y ait de frottement entre la section de la partie terminale de l'obturateur et la section solidaire de la tubulure 23. Après le cisaillement de l'obturateur, le fluide sous pression présent dans la tubulure 23 peut s'échapper par l'alésage 22 et la pression statique de ce fluide dans l'évidement 21 est suffisante pour assurer la remontée du piston 29a dès que les gaz produits par la charge pyrotechnique ont été évacués par les fuites qui existent entre la cartouche 32, le cylindre 27 et la bague filetée 33, l'évacuation du fluide sous pression pouvant alors s'effectuer sans aucun obstacle entre l'alésage de la tubulure 23 et l'alésage 22, et la partie cisaillée de la tubulure cassante pouvant si nécessaire être immobilisée au fond de l'évidement 21 par un dispositif d'amortissement et de positionnement tel que celui représenté à la figure 1.

## Revendications

1. Vanne de sécurité à ouverture par cisaillement d'un conduit borgne (8; 23), comportant un corps (1; 20) muni, d'une part d'au moins un conduit terminé par ce conduit borgne qui possède une zone de fragilisation (17, 18; 35), et d'autre part, d'un dispositif de rupture (5; 24) par cisaillement qui est un dispositif de translation (2; 27) comportant un piston (4; 29) commandé par pression de fluide, caractérisée en ce que le dispositif de rupture (5; 24) se déplace dans un plan qui est incliné par rapport au plan défini par la zone de fragilisation (17, 18; 35) du conduit borgne (8; 23), l'angle d'inclinaison étant compris entre 0,5 degré et 45 degrés cette inclinaison étant telle qu'après cisaillement, la section de la partie terminale (11) du conduit borgne (8; 23) tend à s'écarter de la section solidaire dudit corps (1; 20) de la vanne.

2. Vanne de sécurité selon la revendication 1, caractérisée en ce que l'angle d'inclinaison des deux plans est compris entre 1 et 10 degrés.

3. Vanne de sécurité selon la revendication 1, caractérisée en ce que le piston (4) comporte en aval une guillotine (5) munie de deux lumières (6, 7) dont l'une entoure la partie terminale (11) du conduit borgne (8).

4. Vanne de sécurité selon l'une des revendications 1 ou 2, caractérisée en ce que d'une part la zone de fragilisation (35) du conduit borgne (23) est contenue dans un plan orthogonal à ce conduit (23), et en ce que d'autre part le dispositif de rupture (24) est incliné par rapport à ce plan orthogonal.

5. Vanne de sécurité selon l'une des revendications précédentes, caractérisée en ce que le conduit borgne (8) comporte deux zones de fragilisation (17, 18) disposées de part et d'autre de la partie terminale (11) de ce conduit.

6. Vanne de sécurité selon la revendication 1, caractérisée en ce que le dispositif de rupture (5; 24) est actionné par les gaz d'une charge pyrotechnique (32).

## Patentansprüche

1. Sicherheitsventil, das durch Abscheren eines geschlossenen Rohrendes (8; 23) öffnet, mit einem Gehäuse (1; 20), das versehen ist einerseits mit wenigstens einer Leitung, die in diesem eine Brechzone (17, 18; 35) aufweisenden geschlossenen Rohrende endet, und andererseits mit einer durch Abscheren arbeitenden Brechvorrichtung (5; 24), die eine Verschiebevorrichtung (2; 27) mit einem durch Druckmitteldruck gesteuerten Kolben (4; 29) ist, dadurch gekennzeichnet, dass die Brechvorrichtung (5; 24) sich in einer Ebene verschiebt, die gegenüber der durch die Brechzone (17, 18; 35) des geschlossenen Rohrendes (8; 23) gebildeten Ebene geneigt ist, wobei der Neigungswinkel 0,5° bis 45° beträgt und diese Neigung so beschaffen ist, dass der Querschnitt des Endteils (11) des geschlossenen Rohrendes (8; 23) bestrebt ist, sich von dem mit dem Gehäuse (1; 20) des Ventils verbundenen Querschnitt zu entfernen.

2. Sicherheitsventil nach Anspruch 1, dadurch gekennzeichnet, dass der Neigungswinkel der beiden Ebenen 1° bis 10° beträgt.

3. Sicherheitsventil nach Anspruch 1, dadurch gekennzeichnet, dass der Kolben (4) stromab einen Querschneider (5) mit zwei Öffnungen (6, 7) aufweist, von denen die eine das Endteil (11) des geschlossenen Rohrendes (8) umgibt.

4. Sicherheitsventil nach einem der Ansprüche 1 oder 2, dadurch gekennzeichnet, dass einerseits die Brechzone (35) des geschlossenen Rohrendes (23) in einer zu diesem Rohrende (23) senkrechten Ebene liegt, und dass andererseits die Brechvorrichtung (24) gegenüber dieser senkrechten Ebene geneigt ist.

5. Sicherheitsventil nach einem der vorhergehenden Ansprüche, dadurch gekennzeichnet, dass das geschlossene Rohrende (8) zwei Brechzonen (17, 18) aufweist, die beiderseits des Endteils (11) dieses Rohrendes angeordnet sind.

6. Sicherheitsventil nach Anspruch 1, dadurch gekennzeichnet, dass die Brechvorrichtung (5; 24) durch die Gase eines Treibsatzes (32) betätigt wird.

## Claims

1. A safety valve openable by the shearing of a blind conduit (8; 23), comprising a body (1; 20) provided on the one hand with at least one conduit bounded by the blind conduit which blind conduit possesses a frangible zone (17, 18; 35) and on the other hand with a rupturing device adapted to rupture by shearing, which device is a movable device (2; 27) including a piston (4; 29) controlled by fluid pressure, characterised in that the rupturing device (5; 24) moves in a plane which is inclined with respect to a plane defined by the frangible zone (17, 18; 35) of the blind conduit (8; 23), the angle of inclination being between 0.5 and 45 degrees, this inclination being such that after shearing, the section of the end part (11) of the blind conduit (8; 23) tends to move away from the section thereof integral with said body (1; 20) of the valve.

2. A safety valve according to claim 1, characterised in that the angle of inclination of the two planes is between 1 and 10 degrees.

3. A safety valve according to claim 1, characterised in that the piston (4) includes on the downstream side a guillotine (5) provided with two apertures (6, 7), of which one surrounds the end part (11) of the blind conduit (8).

4. A safety valve according to any one of claims 1 or 2, characterised in that on the one hand the frangible zone (35) of the blind conduit (23) is contained in a plane orthogonal to the conduit (23), and in that on the other hand the rupturing device 24 is inclined with respect to this orthogonal plane.

5. A safety valve according to any one of the preceding claims, characterised in that the blind conduit (8) comprises two frangible zones (17, 18) one disposed on either side of the end part (11) of said conduit.

6. A safety valve according to claim 1, characterised in that the rupturing device (5; 24) is actuated by the gases of a pyrotechnic charge.

FIG_1

FIG_2

FIG_3